# EUROPEAN PATENT APPLICATION

(11) **EP 1 624 363 A1**
(43) Date of publication of application: **08.02.2006**
(21) Application number: 05009931.6
(22) Date of filing: 06.05.2005
(51) Int. Cl.: G06F 1/16, H04N 5/64

(54) **TV set display apparatus whose signal processing unit is separated**

(30) Priority: 06.08.2004 CN 200420029468 U
(71) Applicant: Chen, Chuan Sheng, Taipei (TW)
(72) Inventor: Chen, Chuan Sheng, Taipei (TW)
(74) Representative: Carpintero Lopez, Francisco

(57) **Abstract**

A TV set monitor and host separation device to separate the main board from the monitor integrated with the TV set of the prior art; and the separated main board is designed to become a comprehensive host to control the addition or modification of a TV screen or sound equipment

## Description

### BACKGROUND OF THE INVENTION

### (a) Technical Field of the Invention

The present invention is related to a monitor and host separation device for a TV set, and more particularly, to one allows independent operation of the host and replacement of TV screen or other AV system as desired.

### (b) Description of the Prior Art

Improvements and R&D efforts have never been interrupted since the introduction of TV to the world to upgrade the audio and video transmission to the paramount as possible. The transition from BW to colour TV; spherical to flat; analog to digital, thick and heavy to flat panel however has space for further improvement, namely, making the TV set lighter, and provided with more function. Whether the conventional CRT TV or the newly launched LCOS, the currently in fashion PDP or TFT TV, the host control board and controllers are all provided behind or below the screen to become an integrated TV set resulting in thicker monitor, heavier set and inconvenience to access for service.

### SUMMARY OF THE INVENTION

The primary purpose of the present invention is to provide a device to separate monitor and host of a TV set so to eliminate the defects of larger, heavier and prevention of easy access for service as found with conventional CRT, newly developed LCOS, current PDP or TFT TV, wherein, the screen is attached to the host control board to become an integrated TV set. To achieve the purpose, the host control board is separated from the monitor to become an independent unit from the monitor for the externally provided independent host achieves the addition or variation of A/V on the screen of the TV set. The main board is made according to the principles of TV image output using technologies including frequency multiplication, high resolution, high picture quality and digital I/O, built-in card reader (IC, CF, SD, SM, MS cards), VGA I/O, DVI in and out, TV-tuner in, TV-tuner out, image I/O, RGB output, Stereo Audio I/O, DVD play/burn in, IR output, S-VHS, S terminals, AV terminals, and network connection port. The basic idea of the present invention is to separate the main board from the screen of TV set of prior art to make the monitor even thinner and lighter, and allow addition of diversified display functions to be externally connected without being subject to limitations set forth by any brand of TV set or monitor. Whenever service job is required, simply send the host alone to service station without carrying along the heavy monitor.

The foregoing object and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

Fig. 1 is a perspective front view of the present invention.
Fig. 2 is a perspective rear view of the present invention.

### DETAILED DESCRIPTION OF THE PREFERRED EMBODIMENTS

The following descriptions are of exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

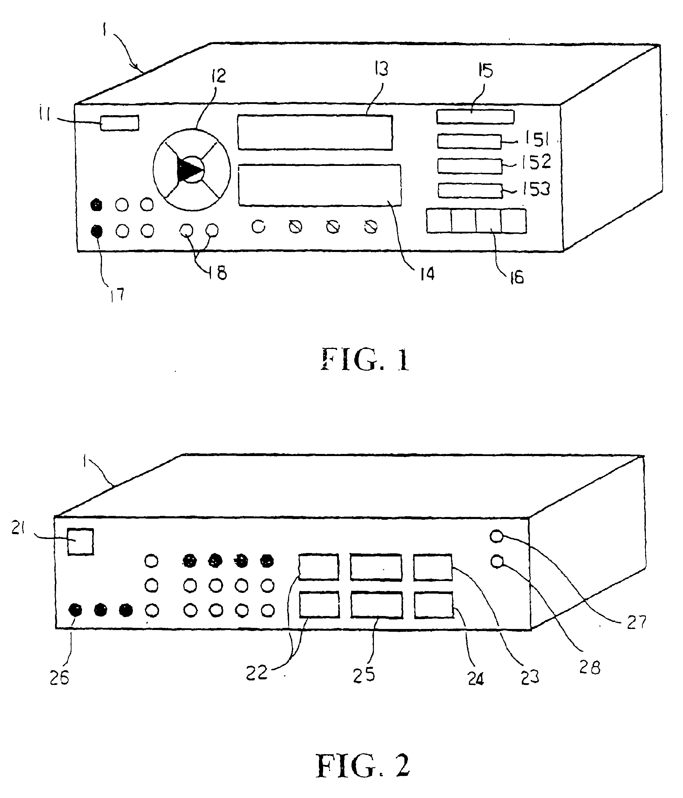

The present invention relates to a device to separate the monitor from the host. The monitor integrated with the TV set of the prior art is separated from the host control board to become a comprehensive host 1 as illustrated in Figs. 1 and 2. A power button 11, a panel control knob 12, a DVD play slot 13, a display 14, an IC card slot 15 containing SD card slot 151, CF card slot 152 and SM card slot 153, a pre-recording and card reader control board 16, S-VHS, Stereo V 17 and microphone terminal 18 are provided on the front of the comprehensive host 1 as illustrated in Fig. 1; and a power cable 21, a VGA connection port 22, a DVI connection port 23, a telephone or network connection port 24, a radio digital video connection port 25, an RCB output connection jack 26, a Cable In 27 and a TV Out 28 are provided on the back of the comprehensive host 1 as illustrated in Fig. 2, for connecting to projector, PDP screen, TFT LCD, liquid crystal digital TV screen, satellite antenna, telecom server and online browsing.

The present invention redesigns the main board and the controller of the TV set for the main board to become compatible with existing TV and all monitors, and containing built-in digital frequency multiplication high resolution and 3D. Other than those connection ports for external connections, additional functions of the TV main board, namely, digital connection to telecom or digital play, direct online or viewing the digital port are also available. It takes cable or wireless link while watching the digital TV, the authentication function is provided by the built-in IC card reader; and more options of reception are available when the host is connected to an external cable or wireless digital video port. Furthermore, DVD player and compatible card readers are all included in the design to make the TV screen host is no more than just a strict host. The host of the present invention provides pre-recording function, 3D effects, playing function, interpretation of various memory cards, films, photos, and direct connection to a projector. While playing TV games, the host of the present invention permits control as desired, and the entertaining effects could be more life when the images are converted into 3D ones by incorporating technology into the entertainment.

The present invention by separating the monitor of a TV set from its host control board allows the thickness of the screen to be downsized to its minimum from 10 ~ 14 cm to 3 ∼ 6 cm. The weight of the monitor is significantly reduced. The standalone main board is designed to become a comprehensive AN control host by integrating all the existing technologies, plus the 3D function to convert any A/V outputs for display as desired. The structure of the present invention is innovative and advanced with improved operation results; therefore, this application for a utility patent is duly filed accordingly.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. A TV set monitor and host separation device to separate the main board from the monitor integrated with the TV set of the prior art; and the separated main board is designed to become a comprehensive host to control the addition or modification of a TV screen or sound equipment; and power button, panel control knob, DVD playing slot, display, IC card reader, SD, CF and SM card slots, pre-recording and card reader control board, S-VHS, Stereo V and microphone terminal are provided on the front of the host; while power cable, VGA connection port, DVI connection port, telephone or network connection port, radio digital video connection port, RCB output connection jack, Cable In and TV Out members are provided on the back side of the host.

2. The TV set monitor and host separation device of claim 1, wherein the main board is produced by following the TV image output principles including members of frequency multiplication, high resolution, high picture quality, digital I/O, built-in card readers, VGA I/O, DVI I/O, TV-Tuner In, TV-Tuner Out, image I/O, RCB Output, stereo audio I/O, DVD plat/burn-in, IR output, S-VHS, S terminal, AV terminal and network connection port.

3. The TV set monitor and host separation device of Claim 1, wherein the built-in card readers include IC cards, CF cards, SD cards, SM cards and MS cards.
